# EUROPEAN PATENT SPECIFICATION

(11) **EP 3 097 230 B1**
(45) Date of publication and mention of the grant of the patent: **25.07.2018**
(21) Application number: 15707788.4
(22) Date of filing: 20.01.2015
(51) Int. Cl.: D06N 3/00, B32B 37/02, B32B 38/16

(54) **METHOD FOR MAKING A PRODUCT OF THE TYPE COMPRISING A LAMINAR SUPPORTING ELEMENT AND AN UPGRADING LAYER AND CORRESPONDING SYSTEM**
VERFAHREN ZUR HERSTELLUNG EINES PRODUKTS MIT EINEM LAMINAREN TRAGELEMENT UND EINER ERWEITERUNGSSCHICHT UND ZUGEHÖRIGES SYSTEM
PROCÉDÉ PERMETTANT DE FABRIQUER UN PRODUIT DU TYPE COMPRENANT UN ÉLÉMENT DE SUPPORT LAMINAIRE ET UNE COUCHE DE VALORISATION ET SYSTÈME CORRESPONDANT

(30) Priority: 23.01.2014 IT VI20140013
(43) Date of publication of application: 30.11.2016
(73) Proprietor: Agosti, Giacomino Adolfo, 36070 Castelgomberto (VI) (IT)
(72) Inventor: Agosti, Giacomino Adolfo, 36070 Castelgomberto (VI) (IT)
(74) Representative: Ziliotto, Tiziano
(86) International application number: PCT/IB2015/050431
(87) International publication number: WO 2015/110953

(56) References cited:
- WO-A1-2008/119001
- CN-A- 102 189 731
- DE-C- 619 128
- GB-A- 1 200 890
- GB-A- 1 257 039
- US-A- 3 575 754
- US-A- 4 474 920
- DATABASE WPI Week 197608 Thomson Scientific, London, GB; AN 1976-13595X XP002730994, & JP S51 559 A (MARUTAMA SANGYO KK) 6 January 1976 (1976-01-06)

## Description

### TECHNICAL FIELD OF THE INVENTION

The invention concerns a method for making a product of the type comprising a supporting element whose visible surface is subjected to a finishing treatment through the application of an upgrading layer. In particular, the invention concerns a method for upgrading hides that are not of top quality.

The invention concerns also a system for the implementation of said method, in addition to the product obtained through said method and/or said system.

### DESCRIPTION OF THE STATE OF THE ART

It should be noted that in the course of the present description the term product means imitation leather or upgraded leather comprising a generally laminar supporting element whose visible surface is subjected to a treatment that determines at least some of the aesthetic characteristics of the product.

As is known, leather is widely used in several sectors, like for example the automotive, furniture, clothing and shoe sectors. Among the various types of leather, the noblest and most expensive part of leather, called pure-grain or full-grain leather, is particularly appreciated, owing to its softness and pleasant feel to the touch.

In order to manufacture also less expensive products having, however, particular characteristics and/or characteristics that can be compared to those of full-grain leather, the known technique has proposed laminar textile and synthetic products, also constituted by agglomerates of microfibres, which imitate the aesthetic aspect of natural leather, reduce production costs and improve some physical and mechanical characteristics.

According to some processes for the manufacture of these products, a film of a synthetic material obtained by drying one or more layers of polyurethane, if necessary coloured, is substantially applied to a laminar support or to low-quality hides.

In a process of known type the hide, which constitutes the supporting element, is treated in a first part of a special system through the application of one or more layers of a synthetic material typically constituted, in fact, by polyurethane. These layers are obtained by applying said synthetic material in the fluid or liquid state using, for example, spraying booths or roller coating machines, which is followed by a drying step for the consolidation (polymerization) of the material. The drying step is usually carried out by making the semi-finished product slide in heated tunnels.

If desired, the steps of application and drying of the synthetic material can be carried out one after the other in order to increase the layers of material deposited on the hide.

The hide with the layer of synthetic material is then trimmed and successively subjected to a second step, even at a later moment and typically in a different remote system (for example, at third party premises), wherein said second step consists of a printing operation with roller or plate presses in order to impress the desired grain or pattern on the layer of synthetic material.

During said pressing step, the hide and the layer of synthetic material are subjected to high pressure (250÷300 atm) and high temperature (100÷110°C) which considerably reduce their thickness (to values in the order of 0.1÷0.2mm) and compact their structure.

Disadvantageusly, said pressing step deteriorates the leather's characteristics of softness or its characteristic feel to the touch, and increase its rigidity. According to the known technique, therefore, further steps are necessary in order to make the leather more pleasant and soft to the touch. These steps are typically constituted by a treatment in a special system (for example, at third party premises), such as stretching or tumbling or equivalent treatments.

The final product is thus ready to be introduced in the market and used (manufacture of shoes, leather items, furniture or other products).

This production method, however, poses some limitations and drawbacks.

A first drawback is constituted by the fact that the layer or layers of synthetic material deposited on the supporting element, in addition to undesirably stiffening the product, thus requiring said stretching or tumbling treatments, contributes/contribute to increasing its thickness, further affecting the flexibility and softness and/or feel to the touch of the final product.

Another drawback posed by said method is constituted by the high number of treatments to which the hide is subjected in order to obtain the final product. This limits the speed of production of the desired product and thus increases its production costs.

Another drawback posed by the method of known type is constituted by the continuous interruptions between the successive processing steps to which the supporting element is subjected. This further limits the speed of production of the desired product and thus increases its production costs.

A further drawback is constituted by the movements to which the hide is subjected during the various steps, in particular when the treatment steps must be carried out in sites that are equipped for performing a specific treatment, for example pressing or tumbling, to even greater disadvantage if these treatments are to be carried out at third party premises. This further limits the speed of production of the desired product and thus increases its production costs. Another drawback connected to said production method is constituted by the complexity and overall dimensions of the system used to manufacture the product.

It is the object of the invention to overcome the said drawbacks.

In particular, it is a first object of the invention to propose a method and a corresponding system that make it possible to obtain a product that is softer and more pleasant to the touch compared to analogous products manufactured with the known techniques.

It is another object of the present invention to propose a method and a corresponding system that make it possible to obtain a product that, compared to the analogous products made using the known techniques, has characteristics that are more similar to those of full-grain leather.

It is a further purpose of the invention to propose a method and a system that, compared to the known methods and systems, make it possible to reduce the production times of said product.

It is a further object of the invention to propose a method and a system that, compared to the known methods and systems, make it possible to reduce the production costs of said product.

It is another object of the invention to propose a method and a system that, compared to the known methods and systems, make it possible to increase the quantity of product that can be obtained per time unit.

Further methods for treating leather are known in the art from prior art patent documents GB1200890 and DE 619 128.

In particular, GB1200890 relates to a method for the manufacture of a coated sheet material having an improved flex-life, comprises applying to a flexible fibrous substrate (having thereon at least one coating layer of a cured polyurethane composition constituting a sub-coat) a relatively thin adhesive layer of a curable polyurethane composition dissolved in an organic solvent; allowing the solvent to evaporate from the adhesive layer for a time sufficient for the adhesive layer to become substantially dry, but insufficient for substantial curing thereof to take place; laminating to the substantially dry adhesive layer a top layer of a dried and cured, or partially cured, polyurethane composition supported on a release band: and removing the release band after final curing of the or each layer which was not fully cured.

Document DE 619128 discloses a device in which a mass is pressed together with a fabric, and in which a conveyor operates so as to dry the resulting combination.

### SUMMARY OF THE PRESENT INVENTION

The present invention is based on the general consideration that it is desirable to manufacture a final product obtained using temperatures and pressures that arc completely different from those used in the systems of known type. This makes it possible to completely avoid affecting the softness and the thickness of the laminar support constituted by the leather to be upgraded.

According to a first aspect of the invention, therefore, the same concerns a method for making a product comprising a laminar support and an upgrading layer, wherein the method comprises the following operations:
- applying at least one layer of a first substance to a supporting surface;
- applying at least one layer of a second substance to a surface of said laminar support;
- treating said at least one layer of said second substance in such a way that said second substance has an absolute moisture value included between 12% and 25%;
- coupling said supporting surface with said laminar support in such a way as to place said first substance in contact with said second substance;
- exerting a pressure on said supporting surface and/or on said laminar support in such a way as to press said first substance against said second substance;
- consolidating the union of said first substance with said second substance;
- removing said supporting surface from said at least one layer of said first substance.

Preferably, the absolute moisture value is included between 15% and 23%, more preferably included between 17% and 22%, and even more preferably equal to 18%.

Preferably, the moisture value is measured using the "AQUA-PICCOLO" moisture meter produced by the German company KPM (K.P. Mundinger GmbH).

In a preferred embodiment of the invention, the treatment of said at least one layer of said second substance so that the second substance has said absolute moisture value is obtained by heating the second substance.

In a preferred embodiment of the invention, the treatment of the layer of the second substance in such a way that the second substance has said absolute moisture value includes also a step of measurement or assessment of the absolute moisture value of the second substance.

Preferably, said pressure has a value included between 30 atm and 90 atm, more preferably a value included between 40 atm and 60 atm, more preferably a value included between 45 atm and 55 atm, and even more preferably a value equal to 50 atm.

In a preferred embodiment of the invention, said pressure has a value that is substantially constant over time.

In another preferred embodiment of the invention, the pressure has a value that varies over time.

Preferably, the consolidation step is carried out by heating the first substance and the second substance to a given temperature.

Preferably, said temperature has a value included between 120°C and 190°C, more preferably a value included between 150°C and 170°C, and even more preferably a value equal to 160°C.

In a preferred embodiment of the invention, the temperature has a value that is substantially constant over time.

In another preferred embodiment of the invention, the temperature has a value that varies over time.

In a preferred embodiment of the invention, the operations of coupling, pressing and consolidation are carried out simultaneously.

In another preferred embodiment of the invention, the operations of pressing and consolidation are carried out after the coupling operation.

The method preferably comprises a further step of consolidation after the operations of coupling, pressing and consolidation.

The further consolidation step is properly obtained by heating.

In a preferred embodiment of the invention, the supporting surface is an embossed surface.

Preferably, the embossed surface belongs to a strip or a body or a die or an embossed tape.

The supporting surface advantageously advances along a substantially rectilinear direction.

In preferred embodiments of the invention, the substances are applied by spraying and/or deposition.

Preferably, the first substance comprises a polyurethane resin.

Preferably, the second substance comprises a polyurethane resin.

In preferred embodiments of the invention, the laminar support comprises leather and/or a natural fabric and/or a synthetic fabric and/or a mixed fabric.

In a preferred embodiment of the invention, the coupling operation takes place through conveyor means suited to place the layer of first substance in contact with the layer of said second substance.

Preferably, the supporting surface and/or said supporting element advance towards each other.

The method properly comprises an operation intended to at least partially consolidate the first substance after application on the supporting surface and before the consolidation operation.

Preferably, the layer of said first substance has a thickness included between 0.02mm and 0.07mm, more preferably a value included between 0.03mm and 0.06mm, and even more preferably a value equal to 0.04mm.

Preferably, the layer of said second substance has a thickness included between 0.02mm and 0.07mm, more preferably a value included between 0.03mm and 0.55mm, and even more preferably a value equal to 0.04mm.

According to another aspect of the present invention, the same concerns a system for making a product comprising a laminar support and an upgrading layer, wherein said system comprises:
- first means for the application of at least one layer of a first substance to a supporting surface;
- second means for the application of at least one layer of a second substance to at least one surface of said laminar support;
- treatment means suited to treat said at least one layer of said second substance and to decrease the absolute moisture value of said second substance;
- conveyor means suited to couple said supporting surface with said laminar support in such a way as to place said first substance in contact with said second substance, said conveyor means being arranged downstream of said first application means and of said second application means;
- pressing means suited to exert a pressure on said supporting surface and/or on said laminar support in such a way as to press said first substance against said second substance;
- means for consolidating said first substance and said second substance.

The treatment means preferably comprise heating means.

In a preferred embodiment of the invention, the system comprises means for measuring the absolute moisture value of the second substance that are associated with the treatment means.

Preferably, the consolidation means comprise heating means.

In a preferred embodiment of the invention, the conveyor means and the pressing means comprise a calender system.

Preferably, in particular, the conveyor means and the pressing means coincide and comprise two opposite rollers suited to couple the supporting surface with the laminar support in such a way as to place the first substance in contact with the second substance and press them against each other.

In said preferred embodiment of the invention, the consolidation means comprise means for heating said opposite rollers.

In another preferred embodiment of the invention, the pressing means and/or the consolidation means are arranged downstream of the conveyor means.

Preferably, the first application means comprise at least one application cylinder and/or a doctor blade system and/or a spraying system and/or equivalent systems. Preferably, the second application means comprise at least one spray nozzle and/or a cylinder system and/or a doctor blade system and/or equivalent systems. In a preferred embodiment of the invention, the supporting surface is an embossed surface belonging to a tape.

Preferably, said tape is closed so as to form a ring.

In another preferred embodiment of the invention, the system comprises, as an alternative to the first application means, at least one feeding unit suited to supply the supporting surface with the first substance.

Preferably, the system comprises a conveyor unit suited to move the laminar support towards the second application means, towards the conveyor means, towards the pressing means, towards the consolidation means and towards an unloading area.

In a preferred embodiment of the invention, the system furthermore comprises a unit for detecting the geometric shape of the surface of the laminar support, suited to activate/deactivate the second application means.

Preferably, the system also comprises a unit for detaching the supporting surface, the detaching unit being arranged downstream of the consolidation means. Preferably, the system furthermore comprises a unit for removing the residual first substance present on the supporting surface, the removal unit being arranged downstream of the detaching unit.

According to another aspect of the invention, the same concerns a product comprising a laminar support and an upgrading layer, said product being obtained with the method or with the system described above.

### BRIEF DESCRIPTION OF THE FIGURES

Further advantages, objects and characteristics, as well as other embodiments of the present invention are defined in the claims and are illustrated here below through the following description, with reference to the attached drawings; in the drawings, corresponding or equivalent characteristics and/or component parts are identified by the same reference numbers. In particular, in the figures:
- Figure 1 schematically shows the several operations included in a method that is the subject of the invention in a system that is also the subject of the invention;
- Figure 1A shows an enlarged detail of Figure 1;
- Figure IB shows another enlarged detail of Figure 1;
- Figure 1C shows a further enlarged detail of Figure 1;
- Figure 2 shows a first variant of the system and the related method of Figure 1;
- Figure 3 shows another variant of the system and the related method of Figure 1 in a first operating position;
- Figure 4 shows the system of Figure 3 in a second operating position.

### DETAILED DESCRIPTION OF THE PRESENT INVENTION

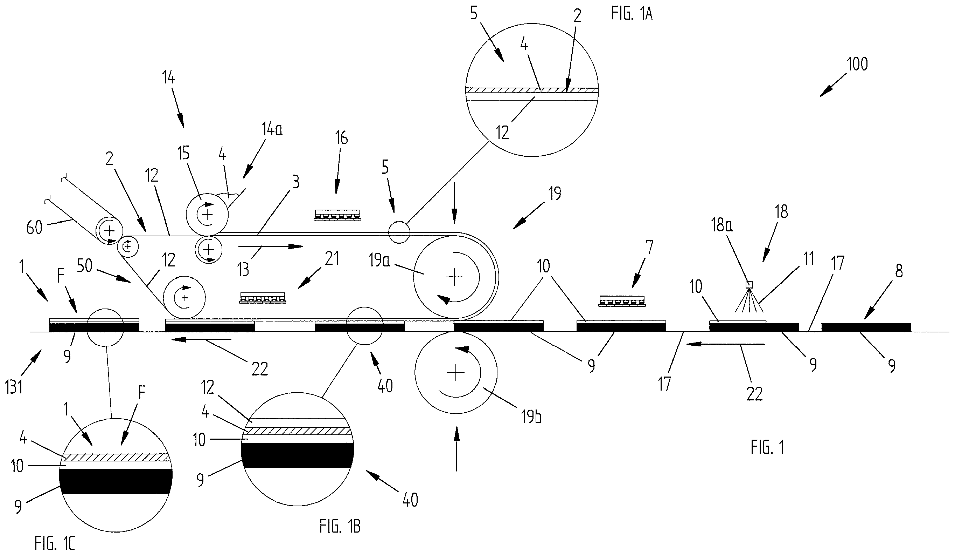

The continuous method for making a product 1 comprising a laminar support 9 and an upgrading layer F will now be described with reference to the diagram illustrating the system 100 shown in Figure 1.

The method substantially includes the operation of applying at least one substantially uniform layer 10 of a synthetic substance 11 to a surface 8 of the laminar support 9.

Preferably, the layer 10 reproduces in the final product 1 the desired aesthetic surface characteristics corresponding to the surface characteristics of an embossed surface or supporting surface 2.

In the example of implementation of the proposed method, schematically shown in Figure 1, the embossed surface 2 belongs to a paper tape 12 that is advanced along a rectilinear direction 13. In other embodiments of the invention, the surface 2 belongs to a body or a die or an embossed tape made of another material.

Above said tape 12 there are first application means 14 suited to apply a first substance 4, or protective substance, as can be clearly understood from the rest of the description.

Said first application means 14 comprise, in the case at hand, a rotary application cylinder 15, fed by a first tank 14a containing said protective substance. The protective substance 4 is preferably in the liquid state or in any case has such viscosity that it allows the application of an homogeneous layer on the tape 12.

In other embodiments of the invention, said first application means 14 may comprise different systems, for example of the deposition type, doctor blade type, spraying type or of equivalent types, even of a type known per se.

In the case at hand, the protective substance 4 preferably comprises a polyurethane substance.

The protective substance 4 is preferably transparent.

In other embodiments of the invention, the protective substance can be constituted by suitable emulsions.

Preferably, the layer of protective substance 4 is successively heated through heating means 16 arranged downstream of the first application means 14. During this step, the protective substance 4 is subjected to an at least partial consolidation/polymerization treatment.

The laminar element 5 that comes out of the heating means 16 is constituted by the tape 12 with the protective substance 4 and thus appears, as shown in detail in Figure 1A, with the tape 12 reproducing the morphological characteristics impressed in the embossed surface 2 covered by a film of protective substance 4.

The protective substance 4 preferably has a thickness included between 0.02mm and 0.07mm, more preferably a value included between 0.03mm and 0.06mm, and even more preferably a value equal to 0.04mm.

In variant embodiments of the invention, the tape 12 with the protective substance 4 can be made in advance and separately and be positioned directly in the system 100, for example, advantageously, in the form of a reel.

Concerning the laminar support 9, in the case at hand it is constituted by a hide, even of low quality. The hide 9 is arranged on a conveyor belt 17 that makes it advance along a rectlinear direction 22 towards the second application means 18 suited to apply a second substance 11, which in the final product 1 will constitute the layer of said synthetic substance 11.

In other embodiments, the laminar support can be of a different type, for example the crust deriving from the processing of leather, and in general be constituted by a supporting element to be upgraded, which at the end of the treatment has special characteristics and/or characteristics that can be compared also to those of full-grain leather.

The second application means 18 comprise a plurality of spray nozzles 18a fed by a suitable tank, not illustrated herein, containing the synthetic substance 11. In other embodiments of the invention, said second application means 18 may comprise a nebulizer that directs the product onto the surface 8 to be treated or a brush, or doctor blade or cylinder systems, or equivalent systems, also of the type known per se and therefore not described here below.

According to a preferred form of implementation of the method, the synthetic substance 11 comprises a polyurethane resin.

In other embodiments, the synthetic substance can be of a different type, for example an acrylic resin or a butadiene resin.

Furthermore, the synthetic substance is preferably of the coloured type, for example comprising colour pigments. The colour is preferably selected based on the aesthetic appearance desired for the final product 1.

The synthetic substance 11 applied to the upper visible surface 8 of the hide 9 makes it possible to upgrade the surface that in itself appears to be of a lower quality compared to high quality leather, such as full-grain leather.

The synthetic substance 11 is preferably in the liquid state or in any case has such viscosity that it allows the application of an homogeneous layer on the upper surface 8 of the hide 9.

The thickness of the synthetic substance 11 has preferably a value included between 0.2mm and 0.7mm, more preferably a value included between 0.3mm and 0.55mm, and even more preferably a value equal to 0.4mm.

At the moment of application through the second application means 18, the resin 11 has an appropriate viscosity value. This viscosity value is preferably included between 3 and 8 minutes, measured using a Ford Cup viscometer as measurement instrument.

Furthermore, at the moment of application through the second application means 18, this resin 11 has a high moisture value, substantially around 70÷80%.

The hide 9 with the layer 10 of resin 11 is successively subjected to a thermal treatment by conveying it towards suitable heat treatment means 7.

During the thermal treatment, which is substantially a heating treatment, the resin 11 is subjected to consolidation/polymerization and its characteristics parameters are progressively modified.

According to the invention, the thermal treatment is carried out in such a way that the resin 11 is not completely polymerized, that is, in such a way that it does not become completely dry.

Preferably, the thermal treatment is carried out in such a way that at the end of the treatment the resin 11 preferably has an absolute moisture value included between 12% and 25%, preferably included between 15% and 23%, more preferably included between 17% and 22%, and even more preferably equal to 18%.

The term "absolute moisture" indicates the material's water content expressed as a percentage of the total weight of the material itself.

Preferably, the desired absolute moisture parameter is obtained by checking the duration of the heating treatment to which the resin 11 is subjected.

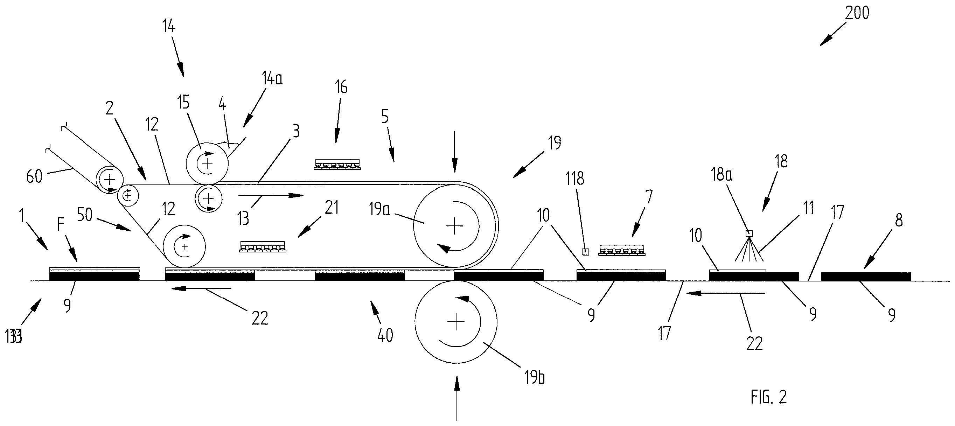

In other embodiments of the invention, the desired absolute moisture value is obtained by controlling it through suitable control means 118 associated with the heating means 7, as schematically shown in the variant embodiment of the system 201 of Figure 2. The system 200 shown in Figure 2 differs from the system 100 shown in Figure 1 only due to the presence of said control means 118. Preferably, the control means 118 comprise a moisture meter for solid materials that is suited to measure the absolute moisture value of the resin 11 downstream of the heating means 7.

In particular, the moisture meter used to measure the absolute moisture value of the resin 11 is constituted by the "AQUA-PICCOLO" moisture meter produced by the German company KPM (K.P. Mundinger GmbH).

In other embodiments of the invention, the desired absolute moisture value can be obtained by controlling other significant parameters, for example by controlling the duration and temperature of the treatment to which the resin 11 is subjected, or again through experimental tests intended to empirically define the temperature and time parameters of the treatment to which the resin 11 is subjected.

The coupling between the laminar element 5 and the support 9 with the layer 10 of resin 11 is obtained through a coupling unit, indicated as a whole by number 19, arranged downstream of the heating means 16 and of the heat treatment means 7. The coupling unit 19 comprises, in the case at hand, a pair of cylinders 19a, 19b that operate in such a way as to place the protective substance 4 of the laminar element 5 in contact with the layer 10 of resin 11 present on the upper surface 8 of the hide 9.

The pair of cylinders 19a, 19b preferably operates in such a way as to press the laminar element 5 against the layer of resin 11 present on the upper surface 8 of the hide 9 with a pressure P and at a temperature T.

For this purpose, the pair of cylinders 19a, 19b can be positioned at a pre-determined mutual distance in order to exert the desired pressure P and is provided with heating means intended to heat the pressed semi-finished product to the desired temperature T.

In a preferred embodiment of the invention, the heating means comprise heating means suited to heat the external surface of one or both of the cylinders 19a, 19b. In other embodiments of the invention, the heating means can be made in a different manner, for example including electrical resistances in proximity to the coupling area or positioning the cylinders inside an oven.

Furthermore, the speed of advancement V of the conveyor belt 17 that makes the semi-finished product advance along the rectilinear direction 22 between the two cylinders 19a, 19b is properly controlled in order to favour the correct mutual coupling of the protective substance 4 with the layer 10 of resin 11.

Preferably, said exerted pressure P has a value included between 30 atm and 90 atm, more preferably a value included between 40 atm and 60 atm, more preferably a value included between 45 atm and 55 atm, and even more preferably a value equal to 50 atm.

Preferably, said temperature T has a value included between 120°C and 190°C, more preferably a value included between 150°C and 170°C, and even more preferably a value equal to 160°C.

Preferably, the speed of advancement V of the tape has a value included between 5 m/minute and 10 m/minute.

In a preferred embodiment of the invention, for example, the tape advances in the 10 m long oven at a speed of 8 m/minute with the oven at a temperature of 120°C.

In another preferred embodiment of the invention, for example, the tape completes two revolutions inside a 10 m long oven at a speed of 10 m/minute with the oven at a temperature of 130°C.

According to the invention, during said coupling step, thanks to the absolute moisture of the resin 11 and to the presence of the film of protective substance 4, the morphological characteristics impressed in the embossed surface 2 are reproduced on the layer of resin 11. Actually, the pattern defined by the embossed surface 2 is impressed in negative on the layer of resin 11.

The absolute moisture of the resin 11 ensures such a consistency that it allows the reproduction of the pattern of the embossed tape 12 on the resin itself. At the same time, the film of protective substance 4 prevents the resin 11 from becoming attached to the embossed surface 2 of the tape 12. The film of protective substance 4 is furthermore transferred on the layer 10 of resin 11. At the exit of the coupling unit 19, therefore, the result will be a semi-finished product 40, shown in detail in Figure 1B, comprising the layer of leather 9, the layer 10 of resin 11 with the desired pattern impressed thereon, the layer of protective substance 4 and the tape 12.

During the coupling step, the layer of resin 11 furthemore undergoes an additional polymerization process, due to the heating, towards complete consolidation.

Advantageously and preferably, the semi-finished product 40 is subjected to a further operation intended to favour complete polymerization and/or drying and to further consolidate the layer 10 of resin 11 on the supporting element 9, in addition to the film of protective substance 4.

This operation preferably comprises the use of further heating means 21, for example an oven.

In variant embodiments of the invention, however, said further heating means may be absent.

At the exit of the further heating means 21, therefore, the result will be the product constituted by the supporting element 9 (hide) provided with the upgrading film F, constituted by the layer 10 of resin 11 and by the protective substance 4, and finally the tape 12.

Downstream of the heating means 21 and in proximity to the unloading area 131 it is possible to identify a separation unit 50 suited to separate the embossed paper tape 12 from the product 1, so that the former is ready for the successive use towards the first application means 14.

Before passing under the first application means 14, the external surface of the embossed paper 12 coming out of the separation unit 50 is advantageously cleaned by removing the residual protective substance 4 that has not been transferred and has not covered some parts of the hide 9. Said cleaning operation is preferably performed by making the external surface of the embossed paper tape 12 adhere against an adhesive tape 60 that removes the residual substance. In variant embodiments of the invention, the embossed paper 12, instead of winding as a ring in the system 100, as shown herein, at the end of use is wound on a special winding cylinder and recovered for a possible re-use.

At the exit of the separation unit 50, therefore, the result will be the desired final product 1 constituted by the supporting element 9 (hide) provided with the upgrading film F constituted by the layer 10 of resin 11 and by the protective substance 4.

Advantageously, the final product 1 will be constituted by leather that is soft and pleasant to the touch, with no need for the further stretching or tumbling steps included in the traditional methods of known type.

If necessary, according to the customer's needs, the final product 1 can be subjected to further processing steps intended to obtain the desired opacity and/or brightness and/or pastiness.

Still advantageously, the steps for obtaining the final product 1 are reduced compared to the systems of known type. Furthermore, all of the manufacturing steps can be performed in the same system 100, with no need for transfers and/or storage and/or transport to third party premises to carry out other processing steps. This increases the product's production speed and thus reduces its production costs.

In the embodiment described herein, furthermore, the system 100 makes it possible to obtain a continuous processing cycle, with particular benefits in terms of production speed, reduced overall dimensions of the system and therefore reduced costs for the production and/or construction of the system.

In particular, in the system 100 carried out according to the preferred embodiment of the invention, the coupling unit 19 that joins the embossed paper tape 12 together with the layer 10 of protective substance 4 to the hide 9 with the layer of resin 11 operates in such a way as to perform the coupling, pressing and thermal treatment substantially at the same time and continuously, while the two rollers 19a, 19b rotate and the conveyor belt 17 advances. Furthemore, the control of said parameters of speed V, pressure P and temperate T, as explained above, has a determining influence on the characteristics desired for the final product 1.

In variant embodiments of the invention, however, one or more steps of the method can be carried out at different moments.

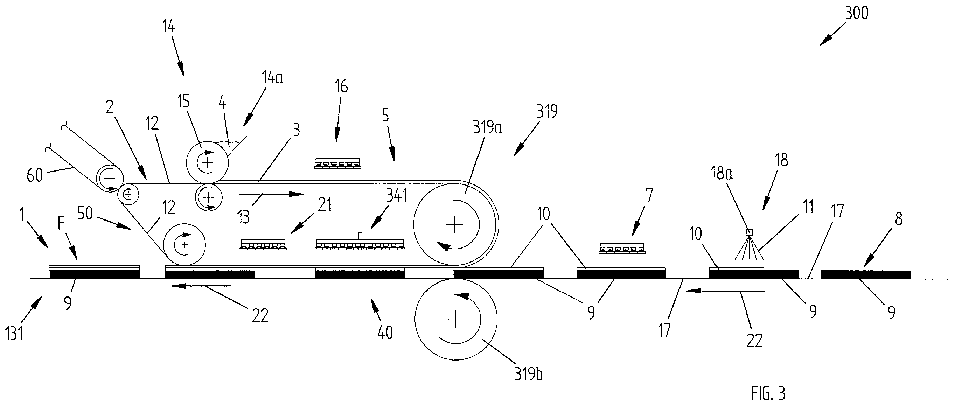

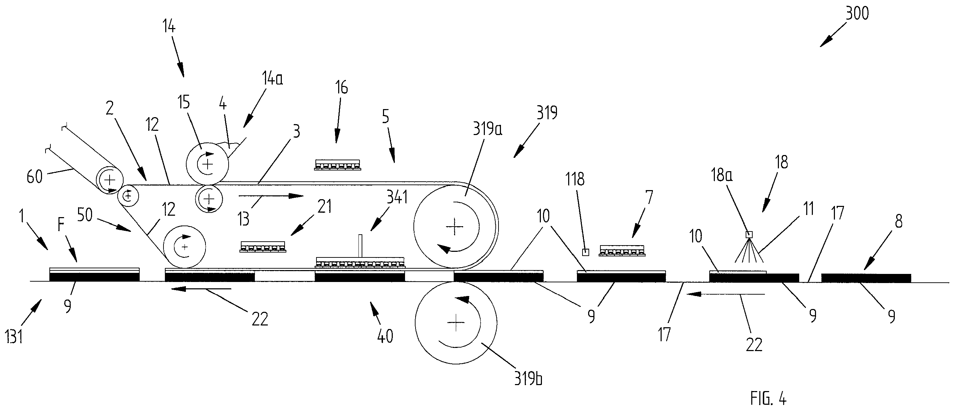

For example, and with reference to the variant embodiment of the system 300 shown in Figures 3 and 4, the step in which the laminar element 5 is rested on the hide 9 with the layer 10 of resin 11 takes place before the pressing operation and the thermal treatment.

For this purpose, the coupling unit 319 comprises two rotating cylinders 319a, 319b that rest the laminar element 5 on the hide 9 with the layer 10 of resin 11 and a successive pressing and heating unit 341 that acts on the semi-finished product with a determined pressure, at a pre-determined temperature for a pre-determined lapse of time, according to the configuraton shown in Figure 4. The pressing and heating unit 341 preferably comprises a heated vertical press. Obviously, in this embodiment of the invention, during the pressing and thermal treatment step the conveyor belt 27 will be stopped in order to allow the treatment to be performed through the vertical press 341, and then continue with the successive semi-finished product.

Advantageously, the method and the system according to the present invention make it possible to obtain the final product using temperatures and pressures that are completely different from and lower than those used in the systems of known type. This makes it possible to completely avoid affecting the softness and thickness of the laminar support constituted by the hide to be upgraded.

It should be noted that in all of the embodiments described above or in any case envisaged by the present invention, during the coupling step the values of the pressure and/or the temperature may not be constant or substantially constant, but may vary according to suitable functions that vary over time in order to better polymerize and stabilize the resin.

With regard to the support 9, it can also be indifferently constituted by a natural or synthetic fabric element or by natural leather, also of the full-grain type. Moreover, in a further variant embodiment of the invention, the second application means 18 may comprise also a unit suited to detect the geometric shape of the surface of the supporting element 9.

Said unit, substantially of the known type, comprises systems for the acquisition and processing of images that cooperate with a control unit in order to control the activation and deactivation of the second application means 18, thus minimizing the consumption of the applied synthetic substance 11.

It is clear that the arrangement of the units as described above is provided by way of purely indicative example, as the parts and means that perform the several operations can be different and more than one, as well as be present in any number inside the system.

For example, the number of thermal treatment means and/or the number of heating means can vary.

It should furthermore be noted that among the various parts of the system further devices or machines suited to perform particular processing steps or to produce special effects can also be present.

It is obvious that any modifications to the system concerning the installation of a different number of means or units, other than the number indicated herein, in any case are all to be considered protected by the present invention.

The above clearly shows that the method and the system proposed allow the set objects to be achieved.

In particular, it is clear that the proposed solution makes it possible to provide a product of the type described above, improving its softness and good feel to the touch and reducing its production costs.

Even though the invention has been described with reference to the attached drawings, during the construction stage it can be subjected to modifications that come all within the same inventive concept expressed in the claims enclosed hereto and therefore are all protected by the present patent.

## Claims

1. Method for making an imitation leather or upgraded leather (1) comprising a laminar support (9) and an upgrading layer (F), comprising the following operations:
- applying at least one layer of a first substance (4) to a supporting surface (2), wherein said supporting surface (2) is an embossed surface;
- applying at least one layer (10) of a resin (11) to a surface (8) of said laminar support (9);
- treating said at least one layer (10) of said resin (11) so that said resin (11) has an absolute moisture value included between 12% and 25%;
- coupling said supporting surface (2) with said laminar support (9) in such a way as to place said first substance (4) in contact with said resin (11);
- exerting a pressure (P) on said supporting surface (2) and/or on said laminar support (9) in such a way as to press said first substance (4) against said resin (11);
- consolidating the union of said first substance (4) with said resin (11);
- removing said supporting surface (2) from said at least one layer of said first substance (4), **characterized in that** during the coupling step the morphological characteristics impressed in the embossed surface (2) are reproduced on the layer said resin (11).

2. Method according to claim 1), **characterized in that** said absolute moisture value is included between 15% and 23%, more preferably included between 17% and 22%, and even more preferably equal to 18%.

3. Method according to any of the preceding claims, **characterized in that** said operation of treating said at least one layer (10) of said resin (11) so that said resin (11) has said absolute moisture value is obtained by heating said resin (11).

4. Method according to any of the preceding claims, **characterized in that** said pressure (P) has a value included between 30 atm and 90 atm, more preferably a value included between 40 atm and 60 atm, more preferably a value included between 45 atm and 55 atm, and even more preferably a value equal to 50 atm.

5. Method according to any of the preceding claims, **characterized in that** said consolidation step is carried out by heating said first substance (4) and said resin (11) to a given temperature (T).

6. Method according to claim 4, **characterized in that** said temperature (T) has a value included between 120°C and 190°C, more preferably a value included between 150°C and 170°C, and even more preferably a value equal to 160°C.

7. Method according to any of the preceding claims, **characterized in that** said coupling, pressing and consolidation operations arc performed at the same time.

8. Method according to any of the claims from 1 to 6, **characterized in that** said pressing and consolidation operations are performed after said coupling operation.

9. Method according to any of the preceding claims, **characterized in that** it comprises a further consolidation step after said coupling, pressing and consolidation operations.

10. Method according to any of the preceding claims, **characterized in that** said resin (11) comprises a mixture of acrylic and polyurethane resins in aqueous dispersion.

11. Method according to any of the preceding claims, **characterized in that** said first substance (4) is at least partially consolidated after its application to said supporting surface (2) and before said consolidation operation.

12. System (100; 200; 300) for making an imitation leather or upgraded leather (1) comprising a laminar support (9) and an upgrading layer (F), wherein said system comprises:
- first application means (14) suited to apply at least one layer of a first substance (4) to a supporting surface (2), wherein said supporting surface (2) is an embossed surface;
- second application means (18) suited to apply at least one layer of a resin (11) to at least one surface (8) of said laminar support (9);
- means (7) for treating said at least one layer (10) of said resin (11) suited to lower the absolute moisture value of said resin (11);
- conveyor means (19a, 19b; 319a, 319b) suited to couple said supporting surface (2) with said laminar support (9) in such a way as to place said first substance (4) in contact with said resin (11), said conveyor means (19a, 19b; 319a, 319b) being arranged downstream of said first application means (14) and of said second application means (18);
- pressing means (19, 341) suited to exert a pressure (P) on said supporting surface (2) and/or on said laminar support (9) in such a way as to press said first substance (4) against said resin (11);
- consolidation means (19a, 19b; 341) suited to consolidate said first substance (4) and said resin (11);
- a unit for detaching said supporting surface, said detaching unit being arranged downstream of said consolidation means;
**characterized by**
- a unit for removing the residual first substance presents on said supporting surface, said removal unit being arranged downstream of said detaching unit.

13. System according to claim 12), **characterized in that** it comprises means for measuring said absolute moisture value of said resin that are associated with said treatment means.

14. Imitation leather or upgraded leather (1) comprising a laminar support (9) and an upgrading layer (F), obtained with the method according to any of the claims from 1 to 11.

## Patentansprüche

1. Verfahren zur Herstellung eines Lederimitats oder eines veredelten Leders (1), ein laminares Trägermaterial (9) und eine Veredelungsschicht (F) umfassend, folgende Vorgänge umfassend:
- Auftrag von wenigstens einer Schicht einer ersten Substanz (4) auf eine Trägerfläche (2), wobei die besagte Trägerfläche (2) eine geprägte Oberfläche ist;
- Auftrag von wenigstens einer Schicht (10) eines Harzes (11) auf eine Oberfläche (8) des besagten laminaren Trägermaterial (9);
- Behandlung der besagten wenigstens einen Schicht (10) des besagten Harzes (11), so dass das besagte Harz (11) einen absoluten Feuchtigkeitsgehalt von 12 % bis 25 % aufweist;
- Kaschierung der besagten Trägerfläche (2) mit dem besagten laminaren Trägermaterial (9) derart, dass die besagte erste Substanz (4) mit dem besagten Harz (11) in Kontakt kommt;
- Ausübung eines Drucks (P) auf die besagte Trägerfläche (2) und/oder das besagte laminare Trägermaterial (9) derart, dass die besagte erste Substanz (4) an das besagte Harz (11) angepresst wird;
- Verfestigung der Verbindung zwischen der besagten ersten Substanz (4) und dem besagten Harz (11);
- Entfernung der besagten Trägerfläche (2) von der besagten wenigstens einen Schicht der besagten ersten Substanz (4), **dadurch gekennzeichnet, dass** während des Kaschierungsschritts die in die geprägte Oberfläche (2) eingeprägten morphologischen Merkmale auf der Schicht aus dem besagten Harz (11) reproduziert werden.

2. Verfahren nach Patentanspruch 1), **dadurch gekennzeichnet, dass** der besagte absolute Feuchtigkeitsgehalt zwischen 15 % und 23 % liegt, vorzugsweise zwischen 17 % und 22%, und besonders bevorzugt gleich 18 % lautet.

3. Verfahren nach einem jeden der vorstehenden Patentansprüche, **dadurch gekennzeichnet, dass** der besagte Vorgang der Behandlung der besagten wenigstens einen Schicht (10) des besagten Harzes (11), so dass das besagte Harz (11) den besagten absoluten Feuchtigkeitsgehalt aufweist, durch Erwärmung des besagten Harzes (11) erfolgt.

4. Verfahren nach einem jeden der vorstehenden Patentansprüche, **dadurch gekennzeichnet, dass** der besagte Druck (P) einen Wert zwischen 30 atm und 90 atm aufweist, vorzugsweise einen Wert zwischen 40 atm und 60 atm, besonders bevorzugt einen Wert zwischen 45 atm und 55 atm, und noch bevorzugter einen Wert gleich 50 atm.

5. Verfahren nach einem jeden der vorstehenden Patentansprüche, **dadurch gekennzeichnet, dass** der besagte Verfestigungsschritt durch Erwärmung der besagten ersten Substanz (4) und des besagten Harzes (11) auf eine gegebene Temperatur (T) erfolgt.

6. Verfahren nach Patentanspruch 4, **dadurch gekennzeichnet, dass** die besagte Temperatur (T) einen Wert zwischen 120 °C und 190 °C aufweist, vorzugsweise einen Wert zwischen 150 °C und 170 °C, und besonders bevorzugt einen Wert gleich 160 °C.

7. Verfahren nach einem jeden der vorstehenden Patentansprüche, **dadurch gekennzeichnet, dass** die besagten Vorgänge des Kaschierens, Pressens und Verfestigens gleichzeitig erfolgen.

8. Verfahren nach einem jeden der Patentansprüche von 1 bis 6, **dadurch gekennzeichnet, dass** das die besagten Vorgänge des Pressens und Verfestigens nach dem besagten Kaschierungsvorgang erfolgen.

9. Verfahren nach einem jeden der vorstehenden Patentansprüche, **dadurch gekennzeichnet, dass** es nach den besagten Vorgängen des Kaschierens, Pressens und Verfestigens einen weiteren Verfestigungsschritt umfasst.

10. Verfahren nach einem jeden der vorstehenden Patentansprüche, **dadurch gekennzeichnet, dass** das besagte Harz (11) ein Gemisch aus Acryl- und Polyurethanharzen in wässriger Dispersion umfasst.

11. Verfahren nach einem jeden der vorstehenden Patentansprüche, **dadurch gekennzeichnet, dass** die besagte erste Substanz (4) nach ihrem Auftrag auf die besagte Trägerfläche (2) und vor dem besagten Verfestigungsvorgang wenigstens teilweise verfestigt ist.

12. System (100, 200, 300) zur Herstellung eines Lederimitats oder eines veredelten Leders (1), ein laminares Trägermaterial (9) und eine Veredelungsschicht (F) umfassend, wobei das besagte System Folgendes umfasst:
- erste Auftragmittel (14), dazu geeignet, wenigstens eine Schicht einer ersten Substanz (4) auf eine Trägerfläche (2) aufzutragen, wobei die besagte Trägerfläche (2) eine geprägte Oberfläche ist;
- zweite Auftragmittel (18), dazu geeignet, wenigstens eine Schicht eines Harzes (11) auf wenigstens eine Oberfläche (8) des besagten laminaren Trägermaterials (9) aufzutragen;
- Mittel (7) zur Behandlung der besagten wenigstens einen Schicht (10) des besagten Harzes (11), dazu geeignet, den absoluten Feuchtigkeitsgehalt des besagten Harzes (11) zu senken;
- Fördermittel (19a, 19b; 319a, 319b), dazu geeignet, die besagte Trägerfläche (2) mit dem besagten laminaren Trägermaterial (9) derart zu kaschieren, dass die besagte erste Substanz (4) in Kontakt mit dem besagten Harz (11) positioniert wird, wobei die besagten Fördermittel (19a, 19b; 319a, 319b) stromabwärts der besagten ersten Auftragmittel (14) und der besagten zweiten Auftragmittel (18) angeordnet sind;
- Druckmittel (19, 341), dazu geeignet, einen Druck (P) derart auf die besagte Trägerfläche (2) und/oder auf das besagte laminare Trägermaterial (9) auszuüben, dass die besagte erste Substanz (4) an das besagte Harz (11) angepresst wird;
- Verfestigungsmittel (19a, 19b; 341), dazu geeignet, die besagte erste Substanz (4) und das besagte Harz (11) zu verfestigen;
- eine Einheit zum Ablösen der besagten Trägerfläche, wobei die besagte Ablöseeinheit stromabwärts der besagten Verfestigungsmittel angeordnet ist,
**gekennzeichnet durch**
- eine Einheit zur Entfernung der an der besagten Trägerfläche verbliebenen ersten Substanz, wobei die besagte Entfernungseinheit stromabwärts der besagten Ablöseeinheit angeordnet ist;

13. System nach Patentanspruch 12, **dadurch gekennzeichnet, dass** es Mittel zur Messung des besagten absoluten Feuchtigkeitsgehalts des besagten Harzes umfasst, welche mit den besagten Behandlungsmitteln verbunden sind.

14. Lederimitat oder veredeltes Leder (1), ein laminares Trägermaterial (9) und eine Veredelungsschicht (F) umfassend, erzeugt durch das Verfahren nach einem jeden der Patentansprüche von 1 bis 11.

## Revendications

1. Méthode pour la réalisation d'un simili-cuir ou d'un cuir amélioré (1) comprenant un support laminaire (9) et une couche d'amélioration (F), comprenant les opérations suivantes:
- application d'au moins une couche d'une première substance (4) sur une surface d'appui (2), où ladite surface de support (2) est une surface gaufrée;
- application d'au moins une couche (10) d'une résine (11) sur une surface (8) dudit support laminaire (9);
- traitement de ladite au moins une couche (10) de ladite résine (11) de façon à ce que ladite résine (11) présente une valeur d'humidité absolue comprise entre 12% et 25%;
- accouplement de ladite surface de support (2) audit support laminaire (9) de façon à mettre ladite première substance (4) en contact avec ladite résine (11);
- application d'une pression (P) sur ladite surface de support (2) et/ou sur ledit support laminaire (9) de façon à presser ladite première substance (4) contre ladite résine (11);
- consolidation de l'union de ladite première substance (4) et de ladite résine (11);
- enlèvement de ladite surface de support (2) de ladite au moins une couche de ladite première substance (4), **caractérisée en ce que** durant la phase d'accouplement les caractéristiques morphologiques imprimées sur la surfae gaufrée (2) sont reproduites sur ladite couche de résine (11).

2. Méthode selon la revendication 1), **caractérisée en ce que** ladite valeur d'humidité absolue est comprise entre 15% et 23%, plus préférablement comprise entre 17% et 22%, et encore plus préférablement égale à 18%.

3. Méthode selon l'une quelconque des revendications précédentes, **caractérisée en ce que** ladite opération de traitement de ladite au moins une couche (10) de ladite résine (11) de façon à ce que ladite résine (11) présente ladite valeur d'humidité absolue est obtenue en chauffant ladite résine (11).

4. Méthode selon l'une quelconque des revendications précédentes, **caractérisée en ce que** ladite pression (P) présente une valeur comprise entre 30 atm et 90 atm, plus préférablement une valeur comprise entre 40 atm et 60 atm, plus préférablement une valeur comprise entre 45 atm et 55 atm et encore plus préférablement une valeur égale à 50 atm.

5. Méthode selon l'une quelconque des revendications précédentes, **caractérisée en ce que** ladite étape de consolidation est effectuée en chauffant ladite première substance (4) et ladite résine (11) à une température déterminée (T).

6. Méthode selon la revendication 4, **caractérisée en ce que** ladite température (T) présente une valeur comprise entre 120 °C et 190 °C, plus préférablement une valeur comprise entre 150 °C et 170 °C et encore plus préférablement une valeur égale à 160 °C.

7. Méthode selon l'une quelconque des revendications précédentes, **caractérisée en ce que** lesdites opérations d'accouplement, de pressage et de consolidation sont réalisées en même temps.

8. Méthode selon l'une quelconque des revendications de 1 à 6, **caractérisée en ce que** lesdites opérations de pressage et de consolidation sont réalisées après ladite opération d'accouplement.

9. Méthode selon l'une quelconque des revendications précédentes, **caractérisée en ce qu'**elle comprend une étape de consolidation supplémentaire après lesdites opérations d'accouplement, de pressage et de consolidation.

10. Méthode selon l'une quelconque des revendications précédentes, **caractérisée en ce que** ladite résine (11) comprend un mélange de résines acryliques et polyuréthanes en dispersion aqueuse.

11. Méthode selon l'une quelconque des revendications précédentes, **caractérisée en ce que** ladite substance (4) est au moins partiellement consolidée après son application sur ladite surface de support (2) et avant ladite opération de consolidation.

12. Système (100 ; 200 ; 300) pour la réalisation d'un simili cuir ou cuir amélioré (1) comprenant un support laminaire (9) et une couche d'amélioration (F), où ledit système comprend:
- de premiers moyens d'application (14) aptes à appliquer au moins une couche d'une première substance (4) sur une surface de support (2), où ladite surface de support (2) est une surface gaufrée;
- de deuxièmes moyens d'application (18) aptes à appliquer au moins une couche d'une résine (11) sur au moins une surface (8) dudit support laminaire (9);
- des moyens de traitement (7) de ladite au moins une couche (10) de ladite résine (11) aptes à diminuer la valeur d'humidité absolue de ladite résine (11);
- des moyens d'acheminement (19a, 19b; 319a, 319b) aptes à accoupler ladite surface de support (2) audit support laminaire (9) de façon à mettre en contact ladite première substance (4) avec ladite résine (11), lesdits moyens d'acheminement (19a, 19b; 319a, 319b) étant disposés en aval desdits premiers moyens d'application (14) et desdits deuxièmes moyens d'application (18);
- des moyens de pressage (19, 341) aptes à appliquer une pression (P) sur ladite surface de support (2) et/ou sur ledit support laminaire (9) de façon à presser ladite première substance (4) contre ladite résine (11);
- des moyens de consolidation (19a, 19b ; 341) aptes à consolider ladite première substance (4) et ladite résine (11);
- une unité pour détacher ladite surfae de support, ladite unité de détachement étant disposée en aval desdits moyens de consolidation;
**caractérisé par**
- une unité pour l'enlèvement de ladite première substance résiduelle présente sur ladite surface de support, ladite unité d'enlèvement étant disposée en aval de ladite unité de détachement.

13. Système selon la revendications 12), **caractérisé en ce qu'**il comprend des moyens pour le mesurage de ladite valeur d'humidité absolue de la dite résine qui sont associés avec des moyens de traitement.

14. Simili cuir ou cuir amélioré (1) comprenant un support laminaire (9) et une couche d'amélioration (F) obtenu avec la méthode selon l'une quelconque des revendications de 1 à 11.
